# EUROPÄISCHE PATENTSCHRIFT

(11) **EP 1 537 409 B1**
(45) Veröffentlichungstag und Bekanntmachung des Hinweises auf die Patenterteilung: **11.10.2006**
(21) Anmeldenummer: 03747829.4
(22) Anmeldetag: 05.09.2003
(51) Int. Cl.: G01N 27/30

(54) **LICHTQUELLE FÜR EIN MESSSYSTEM MIT PHOTOEMPFINDLICHER ELEKTRODE ZUM NACHWEIS EINES ODER MEHRERER ANALYTEN**
LIGHT SOURCE FOR A MEASURING SYSTEM COMPRISING A PHOTOSENSITIVE ELECTRODE USED FOR DETECTING ONE OR SEVERAL ANALYTES
SOURCE LUMINEUSE POUR SYSTEME DE MESURE COMPRENANT UNE ELECTRODE PHOTOSENSIBLE, CONCU POUR DETECTER UNE OU PLUSIEURS SUBSTANCES A ANALYSER

(30) Priorität: 12.09.2002 DE 10242530
(43) Veröffentlichungstag der Anmeldung: 08.06.2005
(73) Patentinhaber: Forschungszentrum Jülich GmbH, 52425 Jülich (DE)
(72) Erfinder: SCHÖNING, Michael Josef, 52428 Jülich (DE); OTTO, Ralph, 4721 Kelmis (BE); YOSHINOBU, Tatsuo, c/o ISIR Osaka University, Osaka, 567-0047 (JP); IWASAKI, Hiroshi, c/o ISIR Osaka University, Osaka, 567-0047 (JP)
(86) Internationale Anmeldenummer: PCT/DE2003/002952
(87) Internationale Veröffentlichungsnummer: WO 2004/027408

(56) Entgegenhaltungen:
- DE-A- 19 914 810
- US-A- 4 883 579
- US-A- 6 015 479
- US-B1- 6 281 670
- "HIGHLY SENSITIVE TASTE SENSOR WITH A NEW DIFFERENTIAL LAPS METHOD" SENSORS AND ACTUATORS B, ELSEVIER SEQUOIA S.A., LAUSANNE, CH, Bd. B25, Nr. 1/3, PART 2, 1. April 1995 (1995-04-01), Seiten 819-822, XP000532861 ISSN: 0925-4005
- PATENT ABSTRACTS OF JAPAN vol. 1997, no. 12, 25. Dezember 1997 (1997-12-25) & JP 09 203722 A (HORIBA LTD), 5. August 1997 (1997-08-05)

## Beschreibung

Die Erfindung betrifft eine Lichtquelle für ein Meßsystem mit photoempfindlicher Elektrode zum Nachweis eines oder mehrerer Analyten.

Aus US 4,591,550 ist eine photoempfindliche Elektrode mit einer Lichtquelle bekannt, bei der die Lichtquelle einen Teil der photoempfindlichen Elektrode beleuchtet, die wiederum in Kontakt mit einer Analytlösung steht. Mit einer solchen Anordnung ist es möglich, die nachzuweisende chemische Substanz nur über den beleuchteten Bereich zu erfassen. Über unterschiedlich sensitive Materialien gegenüber chemischen Substanzen in unterschiedlichen Bereichen der photoempfindlichen Elektrode, und ortspezifischer Beleuchtung, lässt sich auf diese Weise ein Multisensor für mehrere Analyten aufbauen.

Bekannte Meßsysteme können grundsätzlich in zwei Klassen unterteilt werden:

Erstens in Anordnungen, in denen die lichtempfindliche Elektrode (und ihre Trägerstruktur) und die Lichtquellen separat getrennt vorliegen, wie in US 4,591,550 beschrieben. Die Lichtquelle ist auf einer der beiden Elektrodenseiten angeordnet. Die photoempfindliche Elektrode ist in einer Analytlösung eingetaucht und wird von der Seite des Analytbehälters her beleuchtet.

Zweitens in Anordnungen, in denen die Oberfläche der photoempfindlichen Elektrode ein Teil der inneren Wand des Analytbehälters beinhaltet (Haffman, D. G. et al., 1988. Science. 140, 1182-1185).

Als Lichtquellen für solche Meßanordnungen kommen z. B. Lampen, Laser oder Licht emittierende Dioden in Betracht. Zum Nachweis mehrerer Analyten mittels eines solchen Meßsystems kann eine Vielzahl von Meßbereichen auf der photoempfindlichen Elektrode über eine Beleuchtung mittels eines Beleuchtungsarray definiert werden. Die räumliche Anordnung des Arrays kann linear, zweidimensional, regulär, das heißt z. B. schachbrettartig oder zufällig sein. Die Lampen, Laser oder LEDs können gleich oder verschieden sein.

Nachteilig ist ein solches Beleuchtungsarray groß und die einzelnen Lichtquellen (Lampen, LEDs, Laser) müssen über weitere Steuergeräte wie beispielsweise Multiplexer ausgewählt und über gesonderte Treiber angesteuert werden, um das Licht lokal zu emittieren.

Die Verkleinerung lichtadressierbarer, aus dem Stand der Technik bekannter Meßsysteme ist daher nur unter bestimmten Randbedingungen möglich. Messungen innerhalb einer elektrochemischen Zelle, Inkubationskammer oder in einem Bioreaktor, um nur einige Beispiele zu nennen, sind nur unter großem Aufwand oder überhaupt nicht möglich, ebensowenig auch on-site monitoring in fließenden Gewässern, wie z. B. in Wasserrohren, Flüssen, etc.

Aufgabe der Erfindung ist es, ein Messsystem mit photoempfindlicher Elektrode zum Nachweis eines oder mehrerer Analyten bereit zu stellen, mit der auf ein Beleuchtungsarray verzichtet werden kann, und das dennoch eine lokale Beleuchtung der photoempfindlichen Elektrode ermöglicht.

Dabei ist eine zur lokalen Beleuchtung geeignete Lichtquelle aus US 6,281,670 B1 bekannt.

Die Aufgabe wird durch ein Messsystem gemäß der Gesamtheit der Merkmale des Patentanspruchs 1 gelöst. Vorteilhafte Ausgestaltungen ergeben sich aus den darauf rückbezogenen Patentansprüchen.

Das Messsystem mit photoempfindlicher Elektrode zum Nachweis eines oder mehrerer Analyten weist vorteilhaft eine Lichtquelle mit Mitteln zur lokalen Beleuchtung der photoempfindlichen Elektrode auf.

Die Lichtquelle weist als Mittel zur lokalen Beleuchtung der photoempfindlichen Elektrode eine oder mehrere drehbare Lochscheiben oder eine oder mehrere gekrümmte optische Fasern auf.
Die Drehscheiben und/oder Fasern rotieren während der Beleuchtung und führen so dazu, daß die photoempfindliche Elektrode lokal beleuchtet wird. Dies führt dazu, daß kein komplex gesteuertes Beleuchtungsarray benötigt wird.

Zwischen solchen Lichtquellen und der photoempfindlichen Elektrode kann weiterhin eine oder mehrere Linsen zur Fokussierung des Lichts angeordnet sein. Durch solche Mittel wird besonders vorteilhaft die Wirkung erzielt, daß nur ganz bestimmte Bereiche der photoempfindlichen Elektrode durch fokussiertes Licht (z. B. durch Lampen, LEDs) als Meßbereiche definiert werden.

Die Beleuchtung wählt den Meßbereich der photoempfindlichen Elektrode aus. Sie kann direkt oder indirekt generiert werden, induziert, verstärkt oder elektrisch moduliert werden. Die entstehenden Signale werden durch den oder die nachzuweisenden Analyten verändert.

Das Ausgangssignal des Sensors, das zur Bestimmung der Analytkonzentration genutzt wird, ist ein elektrisches Signal. Dieses kann in unterschiedlicher Form als Strom oder Spannung vorliegen, z. B. als DC-, AC-, wiederholungs- oder pulsförmiges Signal sowie deren Veränderungen. Verschiedene Kenngrößen, wie Amplitude, Frequenz, Phase, Pulshöhe, Pulslänge und/oder deren Veränderungen, die durch den Nachweis der Analytsubstanz herrühren, werden dann nachgewiesen. Anstelle der Erfassung der elektrischen Signale, wie Strom oder Spannung, lassen sich Parameter, wie Leitfähigkeit, Impedanz oder Kapazität zur Bestimmung des Analyten vorteilhaft nutzen.

Die einzusetzende Lichtquelle bzw. die Lichtquellen befindet bzw. befinden sich in einer besonders vorteilhaften Ausgestaltung der Erfindung innerhalb eines Behälters und beleuchtet bzw. beleuchten die photoempfindliche Elektrode. Durch diese Maßnahme wird regelmä-ßig bewirkt, daß eine weitere Miniaturisierung des Meßsystems realisiert wird.

Die photoempfindliche Elektrode ist dabei vorteilhaft in der Wand des Behälters angeordnet und stellt somit einen Teil der Wand dieses Behälters dar.
Die photoempfindliche Elektrode wird dann zum Nachweis eines Analyten mit diesem in Kontakt gebracht.
Ein solches tragbares Meßsystem weist regelmäßig den Vorteil auf, daß es durch Integration der Lichtquelle(n) im Behälter und der photoempfindlichen Elektrode in der Wand des Behälters besonders kompakt ist. Auf diese Weise kann die gewünschte Miniaturisierung des Meßsystems besonders gut realisiert werden.

Die Vorder- und die Rückseite der photoempfindlichen Elektrode sind vorteilhaft so in der Wand des Behälters angeordnet, daß sie der Innen- und der Außenseite der Behälterwand entsprechen.
Regelmäßig weist die photoempfindliche Elektrode mindestens einen lichtadressierbaren Nachweisbereich auf. Es können genauso gut aber auch eine Vielzahl lichtadressierbarer Nachweis- bzw. Meßbereiche vorliegen, um mit einer Anordnung entsprechend viele Analyten nacheinander oder gleichzeitig nachzuweisen. Der Analyt befindet sich dabei auf der von der Lichtquelle gegenüberliegenden Seite der photoempfindlichen Elektrode. Die photoempfindliche Elektrode generiert ein elektrisches Signal als Antwort auf die Konzentration der nachzuweisenden Analyten. Die photoempfindliche Elektrode kann insbesondere mehr als einen adressierbaren Meßbereich aufweisen, die dann jeweils durch Beleuchtung ausgewählt werden. Der Begriff "Auswählen" bezieht sich im Allgemeinen auf einen Betriebszustand, bei dem entweder eine Zunahme, oder eine Abnahme oder eine Änderung des Meßsignals aufgrund der Wechselwirkung mit einem Analyten erfolgt. Typischerweise ist dabei ein Meßbereich beleuchtet. Allerdings können auch mehrere Meßbereiche gleichzeitig beleuchtet und die Signale nacheinander oder auch parallel ausgelesen werden.
Mit dem Begriff "Auswählen" ist aber nicht nur gemeint, daß dieser Bereich einen Beitrag zu einem Meßsignal liefert. Es kann genauso gut dieser Bereich als interne Referenz dienen, beispielsweise um Drift- oder Temperatureinflüsse zu kompensieren.

Die Anordnung der photoempfindlichen Elektrode in der Wand des Behälters erfolgt so, daß der Innenraum des Behälters mit der oder den Lichtquellen gegenüber dem oder den zu untersuchenden Analyten in der Flüssigkeit abgedichtet ist. Mögliche Abdichtungen können sein: O-Ringe, direktes An- bzw. Einkleben in die Behälterwand, Dichtungsgummi, etc.. Austauschbare Dichtungen haben allerdings den Vorteil, dass die photoempfindliche Elektrode auch zerstörungsfrei gewechselt werden kann, wodurch ein modularer Aufbau des Meßsystems gewährleistet ist.

Die photoempfindliche Elektrode umfaßt ein Halbleitersubstrat, insbesondere ein Halbleitersubstrat aus Si, SiC, GaAs, GaP, oder aus einem anderen Element- oder Verbindungs-Halbleiter. Der Halbleiter kann n-, p-leitend oder intrinsisch sein. Darüber hinaus kann der Halbleiter eine oder mehrere isolierende Schichten, z. B. aus SiO₂, Si₃N₄, Al₂O₃, ZrO₂, Ta₂O₅, etc. oder deren Kombination enthalten. Diese Schichten sind in der Regel auf der Oberfläche des Halbleiters abgeschieden.

Aus meßtechnischen Gründen weist der Halbleiter einen ohmschen Kontakt oder einen Bereich mit hoher Leitfähigkeit auf.

Die photoempfindliche Elektrode kann zudem mindestens eine Membran an der Grenzfläche zu einem oder mehreren Analyten umfassen.

Die Membran weist ein Festkörpermaterial und/oder ein ionenselektives Polymer auf. Die Membran kann aber auch Biomoleküle und sogar intakte Rezeptoren umfassen.
Die photoempfindliche Elektrode hat somit eine oder mehrere Meßbereiche auf ihrer Oberfläche. Die Meßbereiche können durch eine oder mehrere zum Analyten gerichtete Membranen definiert sein, wobei jeder dieser Meßbereiche durch eine entsprechende Lichtquelle auf der der Membran gegenüberliegenden Seite angeregt wird.
In diesem Fall können die Membranen z. B. unterschiedliche Zusammensetzungen oder Empfindlichkeitscharakteristika aufweisen, so daß unterschiedliche Signalantworten gegenüber den chemischen Analyten existieren. Die Membran kann aus Festkörpermaterialien, welche ionensensitiv reagieren (kristallin, glasförmig) aufgebaut sein oder ionenselektive Polymermaterialien umfassen (inkl. photostrukturierbare Materialien) sowie Biomoleküle, wie z. B. Enzyme, Antikörper, Antigene, DNA, RNA und / oder intakte Rezeptoren umfassen.
Anstelle der Ausbildung mehrerer Membranen, kann auch eine einzige Membran auf der photoempfindlichen Elektrode ausgebildet sein. In diesem Fall besitzen einige Bereiche dieser Membran unterschiedliche Sensorcharakteristika. Es können z. B. unterschiedliche Ionophore in verschiedenen Bereichen der Membran eingebracht sein, die wiederum gegenüber unterschiedlichen Bestandteilen des Analyten verschieden reagieren können. Es kann auch die photoempfindliche Elektrode selbst in der Art und Weise modifiziert werden, daß diese verschiedenen Bereiche unterschiedliche Empfindlichkeiten gegenüber dem oder den Analyten aufweist. Mit Modifizierung kann gemeint sein: Anbindung einer bestimmten chemischen Gruppe an die Oberfläche, Anbindung bestimmter Moleküle (Katalysatoren, Enzyme, Antikörper, Nukleinsäuren wie z. B. DNA, etc.) oder Anbindung einer Zelle bzw. Zellverbandes bzw. intakten Rezeptors.

Das Ausgangssignal des Sensors, das zur Bestimmung der Analytkonzentration genutzt wird, ist ein elektrisches Signal. Dieses kann in unterschiedlicher Form als Strom oder Spannung vorliegen, z. B. als DC-, AC-, wiederholungs- oder pulsförmiges Signal sowie deren Veränderungen. Verschiedene Kenngrößen, wie Amplitude, Frequenz, Phase, Pulshöhe, Pulslänge und/oder deren Veränderungen, die durch den Nachweis der Analytsubstanz herrühren, werden dann nachgewiesen. Anstelle der Erfassung der elektrischen Signale, wie Strom oder Spannung, lassen sich Parameter, wie Leitfähigkeit, Impedanz oder Kapazität zur Bestimmung des Analyten vorteilhaft nutzen.

Das elektrische Signal wird typischerweise über eine externe Meßeinheit ausgelesen. Diese Meßeinheit kann z. B. ein Voltmeter, Amperemeter, Impedanzmeter, Oszilloskop, Digital-Multimeter, Lock-in-Verstärker, Integrator, Elektrochemischer Analyzer oder Computer (ausgestattet mit A/D-Wandler) sein. Zusätzliche Instrumenten oder Meßverstärker/-geräte können ebenfalls verwendet werden:
- Treiber oder Spannungsversorger für die Lichtquelle,
- Multiplexer, um die Meßbereiche der photoempfindlichen Elektrode anzusteuern,
- Oszillator oder Funktionsgenerator, um die Lichtquelle modulieren zu können,
- Vorverstärker, um das elektrische Signal zu verstärken,
- Tiefpass-, Hochpass- oder Bandpassfilter, um störende Signalanteile des elektrischen Meßsignals auszufiltern,
- Spannungsversorgung für die oben genannten Geräte und Komponenten.

Weiterhin kann ein Potentiostat verwendet werden, um eine wohl definierte Kontrolle und Einstellung des Potentials an der photoempfindlichen Elektrode zu erzielen. Dafür benötigt man zusätzlich eine Referenz- und /oder Gegenelektrode. Die Referenz- und / oder Gegenelektrode kann getrennt vom Sensor vorliegen oder mit dem Sensor verbunden sein. Im letzteren Falle können sie beispielsweise auf der zum Analyten gerichteten Seite der lichtempfindlichen Elektrode integriert sein.

Zur elektrischen Ankopplung des Behälters mit diesen genannten Meßeinheiten weist in einer weiteren Ausgestaltung der Erfindung der Behälter eine Öffnung mit Leitungen zu den Lichtquellen und von der photoempfindlichen Elektrode zur Meßeinheit auf. Das durch Nachweis eines oder mehrerer Analyten erzeugte elektrische Signal wird über die Meßeinheit ausgelesen.
Im weiteren wird die Erfindung an Hand einiger Ausführungsbeispiele und der beigefügten Figuren näher erläutert.

Es zeigen:
Fig. 1: Meßsystem zum Nachweis mindestens eines Analyten
Fig. 2: Beispiel einer photoempfindlichen Elektrode
Fig. 3, 4: erfindungsgemäße Lichtquellen mit Mitteln (drehbare Lochscheibe, drehbare optische Faser) zur lokalen Beleuchtung der photoempfindlichen Elektrode.
Fig. 5, 6: tragbare Meßsysteme mit weiteren Steuer- und Auswertegeräten, welche zum Teil im Behälter angeordnet sind.
Fig. 7: Beispiel einer mit dem erfindungsgemäßen Meßsystem aufgenommenen Meßreihe.

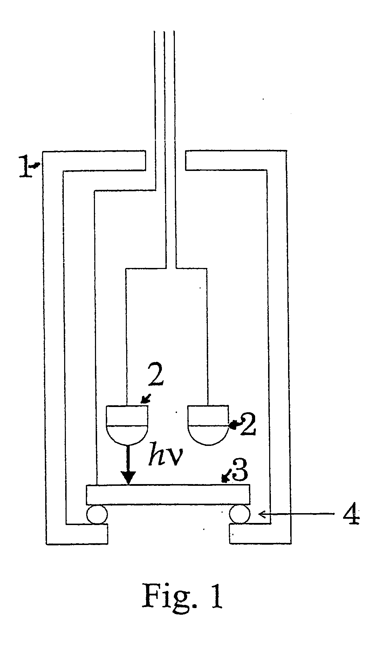

Das Messsystem in Figur 1 umfaßt einen Behälter 1, zwei Lichtquellen 2, welche im Behälter 1 angeordnet sind, und eine photoempfindliche Elektrode 3, die über einen O-Ring 4 dicht in die Wand des Behälters eingelassen ist. Die photoempfindliche Elektrode 3 weist eine Fläche von z.B. 10 x 10 oder 15 x 15 mm² auf. Die untere Seite der photoempfindlichen Elektrode 3 ist zu dem oder den Analyten gerichtet. Diese Seite der photoempfindlichen Elektrode 3 entspricht somit der Außenwand von Behälter 1. Die dieser Seite gegenüberliegende andere Seite der photoempfindlichen Elektrode 3 ist zu den zwei Lichtquellen 2 gerichtet und entspricht somit der Innenwand von Behälter 1. Der Behälter 1 weist z. B. eine Breite von 20 mm und eine Höhe von z. B. 100 mm auf. Der Behälter 1 ist hier ein Plastikzylinder und weist am oberen Teil eine Öffnung auf. Über die Öffnung führen zwei Leitungen zu den Lichtquellen 2 und eine Leitung von der photoempfindlichen Elektrode 3 zu nicht weiter dargestellten Auswertegeräten.
Die Anzahl der Leitungen ist hierauf selbstverständlich nicht beschränkt. Vielmehr können je nach Bedarf auch mehr Leitungen zu den Lichtquellen bzw. zu den Auswertegeräten führen.
Vorteilhaft kann auf strahlungsdurchlässige Materialien für den Behälter 1 vollständig verzichtet werden.
Das Meßsystem ist kompakt, klein, handlich und dadurch tragbar. Das System ist zudem modular aufgebaut. Die Lichtquellen 2 können vorteilhaft Mittel zur lokalen Beleuchtung der photoempfindlichen Elektrode 3 aufweisen.

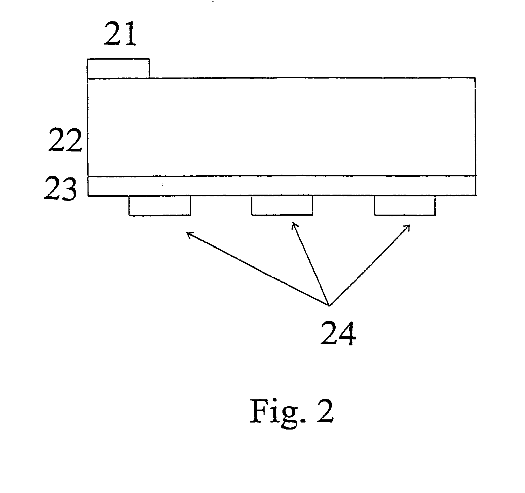

Fig. 2 zeigt die photoempfindliche Elektrode, umfassend einen ohmschen Kontakt 21 auf einer Silizium-Halbleiterplatte 22, sowie mit einem Isolator 23 und drei verschiedenen Membranen 24 auf dem Isolator 23. Die Membranen 24 werden von einer erfindungsgemäßen Lichtquelle, die oberhalb des ohmschen Kontakts angeordnet ist, beleuchtet und es entsteht durch Reaktion mit einem Analyten ein nachweisbares elektrisches Signal.

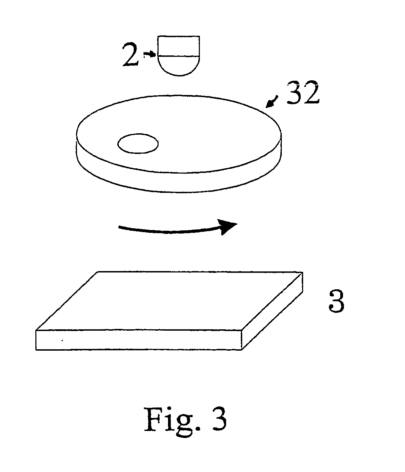

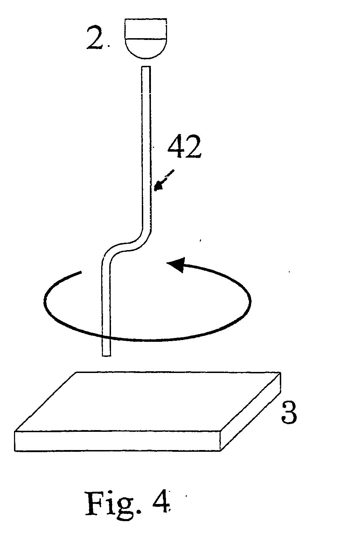

Figuren 3 und 4 zeigen die zwei Ausführungsformen solcher erfindungsgemäßer Lichtquellen. In Fig. 3 wird eine drehbare Lochscheibe 32 zwischen lichtempfindlicher Elektrode 3 und Lichtquelle 2 angeordnet. Die drehbare Lochscheibe 32 dient als Mittel zur lokalen Beleuchtung der photoempfindlichen Elektrode 3. Wenn die Scheibe rotiert, werden nur bestimmte Bereiche der photoempfindlichen Elektrode 3 durch die Lichtquelle 2 als Meßbereiche definiert.

In Fig. 4 wird die photoempfindliche Elektrode 3 mittels einer gekrümmten optischen Faser 42 lokal beleuchtet. Bei Rotation der Faser 42 werden nur Teile der photoempfindlichen Elektrode 3 beleuchtet; dadurch werden wiederum die Meßbereiche definiert.

Die in Fig. 3 und in Fig. 4 gezeigten Lichtquellen 32 und 42 führen unmittelbar dazu, daß die photoempfindliche Elektrode 3 nur lokal beleuchtet wird. Deshalb kann bei Wahl solcher Lichtquellen auf ein komplex gesteuertes Beleuchtungsarray verzichtet werden. Dies führt zu einer weiteren Verkleinerung des Meßsystems.

Es kann zusätzlich eine Linse (nicht dargestellt) in der Nähe der drehbaren Lochscheibe 32 bzw. der Faser 42 zur Fokussierung des Lichts angeordnet sein.

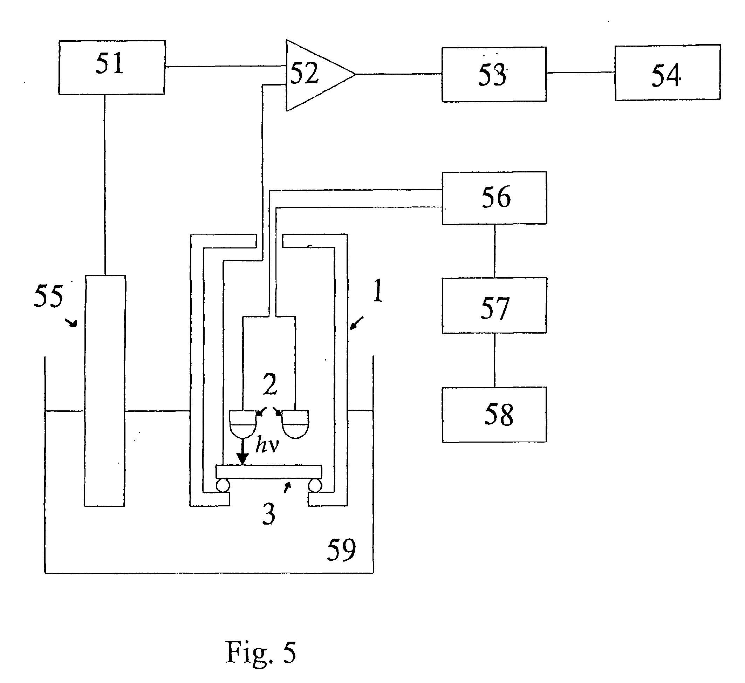

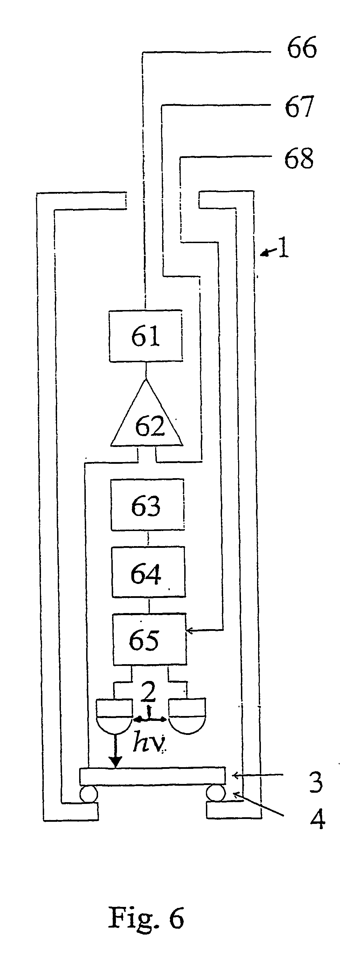

Figuren 5 und 6 zeigen zwei Ausführungsformen des portablen Meßsystems in einer Meßanordnung. Die Bezugszeichen der Fig. 1 und 2 sind in den Fig. 5 und 6 nur zum Teil eingezeichnet.

In Fig. 5 werden zwei LEDs 2 als Lichtquellen mittels eines Multiplexers 56 ausgewählt und über einen LED-Treiber 57 angesteuert, um das modulierte Licht zu emittieren. Die Frequenz des modulierten Lichts wird von einem Oszillator 58 vorgegeben. Das Licht der LEDs 2 beleuchtet einen Meßbereich der photoempfindlichen Elektrode 3 und generiert einen ac-Photostrom, dessen Amplitude von der Bias-Spannung des Potentiostaten 51 und der Konzentration der Analytzusammensetzung im Meßbereich abhängt. Der ac-Photostrom wird dann im Vorverstärker 52 verstärkt und die dc-Komponente über den Hochpassfilter 53 ausgeblendet. Abschließend wird die Amplitude des ac-Photostroms mit dem Amperemeter 54 gemessen. Referenzelektrode 55 stellt eine weitere Komponente des portablen Meßsystems dar. Während des Nachweises ist die photoempfindliche Elektrode 3 in der Wand des Behälters 1 mit dem oder den Analyten in Kontakt gebracht. Der oder die Analyten befinden sich in einer Flüssigkeit 59 in einem Behälter.

Einige dieser Komponenten des in Figur 5 dargestellten Meßaufbaus können durch einen miniaturisierten, integrierten Aufbau im Behälter 1 des Meßsystems angeordnet sein. Dies wirkt sich nicht nur vorteilhaft hinsichtlich der Miniaturisierbarkeit aus, sondern auch, wenn es darum geht, Störungen und Rauschen des elektrischen Signals aufgrund der Leitungslänge zu reduzieren. Figur 6 zeigt eine von zahlreichen denkbaren möglichen Ausführungsformen, in der die oben genannten Funktionen bereits integriert vorliegen. Die Bezugszeichen in Figur 6 bedeuten:
1 Behälter
2 zwei LEDs als Lichtquellen
3 photoempfindliche Elektrode
4 O-Ring
61 Hochpaßfilter
62 Vorverstärker
63 Oszillator
64 LED-Treiber
65 Multiplexer
66 Sensor-Ausgang
67 Potentialkontrolle
68 Auswahl LED

Behälter 1 beinhaltet dann in besonders vorteilhafter und kompakter Weise weitere zum Nachweis des Analyten bzw. der Analyten notwendige Bauteile wie beispielsweise Hochpaßfilter 61, Vorverstärker 62, Oszillator 63, LED-Treiber 64 und Multiplexer 65. Hierauf ist die Erfindung nicht beschränkt. Es ist vorstellbar weitere notwendige Bauteile in dem Behälter 1 zu integrieren und durch geschickte Anordnung eine weitere Miniaturiesierung des portablen Meßsystems zu erzielen.

Erfindungsgemäß sind, in diesen Ausführungsbeispielen der Fig. 5 und 6, lokale Bereiche der photoempfindlichen Elektrode durch Lichtquellen wie in Figur 3 bzw. Figur 4 dargestellt auszuwählen.

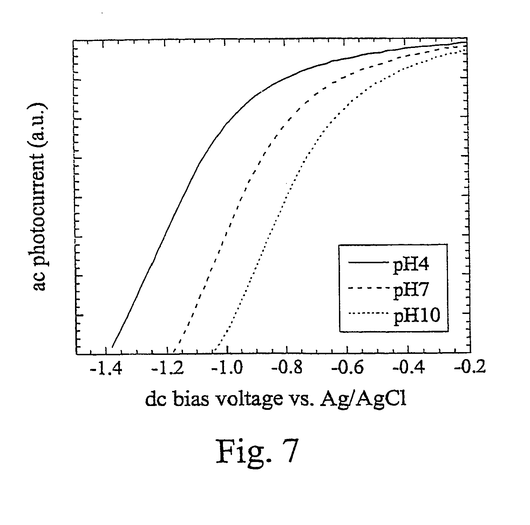

Figur 7 zeigt exemplarisch eine Meßkurve eines lichtempfindlichen Sensorbereichs für unterschiedliche pH-Konzentrationen. Abhängig vom verwendeten pH-Wert verschiebt sich die I/U- (Photostrom-Spannung) Kennlinie entlang der Spannungsachse. Diese Verschiebung kann als Sensorsignal ausgelesen werden.

## Patentansprüche

1. Messsystem mit einer photoempfindlichen Elektrode (3) und mindestens zwei Messbereichen zum Nachweis eines oder mehrerer Analyten, umfassend mindestens eine Lichtquelle (2), mit Mitteln zur lokalen Beleuchtung der photoempfindlichen Elektrode (3), **dadurch gekennzeichnet, dass** zwischen Lichtquelle (2) und photoempfindlicher Elektrode (3) eine drehbare Lochscheibe (32) oder eine drehbare gekrümmte optische Faser (42) angeordnet ist, durch deren Rotation unterschiedliche Messbereiche der photoempfindlichen Elektrode (3) beleuchtet werden können.

2. Messsystem nach einem der vorhergehenden Ansprüche, **dadurch gekennzeichnet, dass** die Lichtquelle Linsen zur Fokussierung des Lichts aufweist.

3. Messsystem nach einem der vorhergehenden Ansprüche, umfassend einen Behälter (1) indem die mindestens eine Lichtquelle (2) angeordnet ist.

4. Messsystem nach einem der vorhergehenden Ansprüche, umfassend eine Messeinheit, welche das durch Nachweis eines oder mehrerer Analyten erzeugte elektrische Signal ausliest.

5. Messsystem nach einem der vorhergehenden Ansprüche, umfassend einen Potentiostat (51) zur Erzeugung einer definierten Spannung an der photoempfindlichen Elektrode (3).

6. Messsystem nach einem der vorhergehenden Ansprüche, **dadurch gekennzeichnet, dass** der Behälter (1) weitere zum Nachweis des Analyten bzw. der Analyten notwendige Bauteile (61, 62, 63, 64, 65) beinhaltet.

7. Messsystem nach einem der vorhergehenden Ansprüche, **dadurch gekennzeichnet, dass** die photoempfindliche Elektrode (3) in der Wand des Behälters (1) angeordnet ist bzw. einen Teil der Wand des Behälters (1) darstellt.

## Claims

1. Measuring system comprising a photosensitive electrode (3) and at least two measuring areas for detecting one or more analytes, including at least one light source (2), with means for local illumination of the photosensitive electrode (3), **characterised in that** a rotatable perforated disc (32) or a rotatable curved optical fibre (42) is arranged between the light source (2) and the photosensitive electrode (3) and different measuring areas of the photosensitive electrode (3) can be illuminated by the rotation thereof.

2. Measuring system according to one of the preceding claims, **characterised in that** the light source has lenses for focusing the light.

3. Measuring system according to one of the preceding claims, including a container (1) in which the at least one light source (2) is arranged.

4. Measuring system according to one of the preceding claims, including a measuring unit which reads out the electric signal generated by the detection of one or more analytes.

5. Measuring system according to one of the preceding claims, including a potentiostat (51) for generating a defined voltage at the photosensitive electrode (3).

6. Measuring system according to one of the preceding claims, **characterised in that** the container (1) includes further components (61, 62, 63, 64, 65) required for the detection of the analyte or analytes.

7. Measuring system according to one of the preceding claims, **characterised in that** the photosensitive electrode (3) is arranged in the wall of the container (1) or forms part of the wall of the container (1).

## Revendications

1. Système de mesure avec une électrode photosensible (3) et au moins deux zones de mesure pour détecter une ou plusieurs substance(s) à analyser, comprenant au moins une source lumineuse (2) avec des moyens pour l'éclairage local de l'électrode photosensible (3), **caractérisé en ce qu'**entre la source lumineuse (2) et l'électrode photosensible (3) est disposé un disque perforé tournant (32) ou une fibre optique recourbée tournante (42) dont la rotation permet d'éclairer des zones de mesure différentes de l'électrode photosensible (3).

2. Système de mesure selon l'une quelconque des revendications précédentes, **caractérisé en ce que** la source lumineuse est munie de lentilles pour focaliser la lumière.

3. Système de mesure selon l'une quelconque des revendications précédentes, comprenant un conteneur (1) dans lequel est disposé l'au moins une source lumineuse (2).

4. Système de mesure selon l'une quelconque des revendications précédentes, comprenant une unité de mesure qui lit le signal électrique qui est généré par le fait qu'une ou plusieurs substance(s) à analyser est/sont détectée(s).

5. Système de mesure selon l'une quelconque des revendications précédentes, comprenant un potentiostat (51) servant à générer une tension définie sur l'électrode photosensible (3).

6. Système de mesure selon l'une quelconque des revendications précédentes, **caractérisé en ce que** le conteneur (1) comprend d'autres composants (61, 62, 63, 64, 65) qui sont nécessaires pour détecter la substance à analyser ou les substances à analyser.

7. Système de mesure selon l'une quelconque des revendications précédentes, **caractérisé en ce que** l'électrode photosensible (3) est disposée dans la paroi du conteneur (1) et/ou constitue une partie de la paroi du conteneur (1).
